# NEW EUROPEAN PATENT SPECIFICATION

(11) **EP 1 153 324 B2**
(45) Date of publication and mention of the opposition decision: **07.03.2007**
(45) Mention of the grant of the patent: 20.08.2003
(21) Application number: 00903900.9
(22) Date of filing: 18.02.2000
(51) Int. Cl.: G02B 6/02, C03B 37/075, C03B 37/027, G02B 6/255, G02B 6/28

(54) **PHOTONIC CRYSTAL FIBRES**
PHOTONISCHE KRISTALLFASERN
FIBRES OPTIQUES A CRISTAL PHOTONIQUE

(30) Priority: 19.02.1999 GB 9903918
(43) Date of publication of application: 14.11.2001
(73) Proprietor: Crystal Fibre A/S, 3460 Birkerod (DK)
(72) Inventor: RUSSELL, Philip St. John, Bath BA2 7EB (GB); BIRKS, Timothy Adam, Bath BA2 5QY (GB); KNIGHT, Jonathan Cave, Bath BA2 8PY (GB)
(74) Representative: Hegner, Anette
(86) International application number: PCT/GB2000/000599
(87) International publication number: WO 2000/049435

(56) References cited:
- WO-A-99/00685
- GB-A- 2 169 096
- JP-A- 59 177 503
- US-A- 4 737 004
- US-A- 5 337 380
- US-A- 5 729 643
- US-A- 5 764 831
- US-A- 5 802 236
- US-A- 5 805 751
- RUSSELL P ST J ET AL: "Silica/air photonic crystal fibres" JAPANESE JOURNAL OF APPLIED PHYSICS, SUPPLEMENTS,JA,JAPAN SOCIETY OF APPLIED PHYSICS. TOKYO, vol. 37, no. SUPPL. 37-01, 1998, pages 45-48-48, XP002111542 ISSN: 0021-4922
- BARKOU S E ET AL: "SILICA-AIR PHOTONIC CRYSTAL FIBER DESIGN THAT PERMITS WAVEGUIDING BY A TRUE PHOTONIC BANDGAP EFFECT" OPTICS LETTERS,US,OPTICAL SOCIETY OF AMERICA, WASHINGTON, vol. 24, no. 1, 1 January 1999 (1999-01-01), pages 46-48, XP000801368 ISSN: 0146-9592
- J.C.KNIGHT ET AL: "aLL-SILICA SINGLE-MODE OPTICAL FIBER WITH PHOTONIC CRYSTAL CLADDING" OPTICS LETTERS., vol. 21, no. 19, 1 October 1996 (1996-10-01), pages 1547-1549, XP000618354 OPTICAL SOCIETY OF AMERICA, WASHINGTON., US ISSN: 0146-9592

## Description

This invention relates to the field of photonic crystal fibres.

A photonic crystal fibre is a special form of optical fibre. Single-mode optical fibres are widely used in applications such as telecommunications and sensing. Such fibres are typically made entirety from solid transparent materials such as glass and each fibre typically has the same cross-sectional structure along its length. The transparent material in one part (usually the middle) of the cross-section has a higher refractive index than the rest and forms an optical core within which light is guided by total internal reflection. We refer to such a fibre as a standard fibre.

There are many well-established techniques and machines for handling and processing standard fibres; for example, cleavers use a hard knife-edge to break a fibre, giving a clean end-face, and fusion splicers use a hot electric arc to join two fibres together at their ends. One process, fusion-tapering, is used to make a variety of fibre devices for performing some function on light passing along a fibre. In that process, a fibre is locally heated until it softens and then it is stretched so as to narrow the fibre locally in the heated region. Light passing along the fibre is affected by the narrowness of the treated region. In a typical tapered single-mode fibre, the light spreads out from the core and occupies more of the surrounding cladding. If the fibre is sufficiently narrowed, the light spreads out from the core completely and is then guided by the outer boundary of the entire fibre. The fibre is typically heated by immersion in a gas flame, proximity to an electrical heater or exposure to an intense laser beam.

A tapered fibre that is cleaved at the narrowest point of the taper can act as a beam expander because the light wave has a greater cross-section at the cleave than it has in the untreated fibre. Such a beam expander can assist the launching of light into the fibre and extraction of light from the fibre.

A fibre that is tapered so that light is locally guided at its outer boundary can act as a local optical sensor. In the tapered region, the light is sensitive to the medium surrounding the fibre, whereas elsewhere it is insensitive because it is buried in the central core.

Two or more fibres that are tapered together in parallel contact can act as a fibre beam-splitter (or directional coupler), in which at least some of the light in one fibre transfers across to the other fibre in the narrowed region.

In the last few years a non-standard type of optical fibre has been demonstrated, called the photonic-crystal fibre (PCF). Typically, this is made from a single solid, and substantially transparent, material, such as fused silica glass, within which is embedded a periodic array of air holes, running parallel to the fibre axis and extending the full length of the fibre. A defect in the form of a single missing air hole within the regular array forms a region of raised refractive index, which acts as a waveguiding fibre core within which light is guided, in a manner analogous to total-internal-reflection guiding in standard fibres. Another mechanism for guiding light is based on photonic-band-gap effects rather than total internal reflection. Photonic-band-gap guidance can be obtained by suitable design of the array of air holes. Light of some propagation constants can be confined to the core and will propagate therein.

Photonic-crystal fibre can be fabricated by stacking glass capillaries and canes on a macroscopic scale into the required shape, and then holding them in place while fusing them together and drawing them down into a fibre.

The PCF has a number of technologically significant properties; for example, it can support a single-mode over a very broad range of wavelengths, it can have a large mode area and thus carry high optical powers, and it can have a large normal dispersion at the telecommunications wavelength of 1.55 microns. PCFs are typically not circularly symmetric, as a result of the stack-and-draw method typically used to make them.

Technological application of PCFs would be facilitated by handling and processing techniques parallel to those described above for standard fibres. Unfortunately, some of those techniques are not appropriate for PCFs; for example, an attempt to fusion splice two PCFs together causes the air inside them to expand explosively, destroying the fibre ends being joined.

P. St. J. Russell et al. describe in 'Silica/Air Photonic Crystal Fibres', Jpn. J. Appl. Phys., Vol. 37, Suppl. 37-1, pp 45-48 (1998) the fabrication, characterisation and applications of silica/air photonic crystal fibres with microscopic arrays of air capillaries running along their length. The fibre supports a robust single mode over a spectral range very much larger than standard single-mode telecom fibres.

United States Patent No. 5,802,236 describes non-periodic microstructured optical fibres that guide radiation by index guiding. In one example, a fibre has a solid silica core that is surrounded by an inner cladding region and an outer cladding region. The cladding regions have capillary voids extending in the axial fibre direction with the voids in the outer cladding region having a larger diameter than those in the inner cladding region, such that the effective refractive index of the outer cladding region is greater than that of the inner cladding region. WO 99/00685 discloses a large core photonic crystal fibre which is used in a fibre amplifier system, wherein a length of a photonic crystal fibre is doped and pumped with a pump radiation source via a wavelength-selective coupler such as an all-fibre fused coupler device.

It is an object of the invention to provide a method of producing PCF optical devices analogous to standard fibre devices.

According to the invention there is provided a method of producing an optical device. The method is defined in the claims.

The words "after fabrication" should be taken to mean any time after the fibre has been drawn.

The heat treatment processes that can be used are typically the same as those described above for fusion tapering of standard fibres. As with standard fibres, the heat treatment can be accompanied by stretching, to narrow the fibre down. In contrast to standard fibres, however, changes in optical properties can result without stretching the fibre at all; that is because heat treatment can allow some or all of the holes in the fibre to collapse partially or completely under the influence of surface tension. That can be achieved either with or without simultaneous stretching. Furthermore, when some of the holes are pressurised, they can be made to expand instead of collapse, and differential pressurisation of the holes can, in principle, be used to create any pattern of hole collapse and expansion. As with the tapering of standard fibres, for most applications, the transitions between untreated fibre and the middle of the heat treated region must be sufficiently gradual that an acceptably small amount of light is lost along the transition - the so-called criterion for adiabaticity.

It may be that at least some, or all, of the holes are expanded in the heat-treated region.

It may be that at least some, or all, of the holes are collapsed at least partially, or completely, in the heat-treated region.

Preferably, the holes are collapsed or expanded in a pattern that is not circularly symmetric, such that the birefringence of the fibre is altered in the heat-treated region.

The fibre may be narrowed in the heat-treated region.

The photonic crystal fibre obtained by the method may be included in an optical device.

A mode-field transformer may comprise the photonic crystal fibre, the pattern formed by the collapse or expansion of holes in the heat-treated region of the photonic crystal fibre being such that a guided mode propagating through the photonic crystal fibre will have its field distribution changed by propagation through the heat-treated region. The shape and size of the field distribution of the guided mode in a PCF depends on the relative sizes of the air holes and their separations from each other. Thus a PCF that has been heat treated to change the sizes of the holes (or narrow down the entire fibre) can act as a mode field transformer.

The method may provide an optical device in the form of a multi-mode to single-mode transformer or mode filter may comprise the photonic crystal fibre, in which the pattern formed by the collapse or expansion of holes is such that the second, untreated region of the fibre is multi-mode and the first, heat-treated region is single mode for at least one wavelength of light. Light propagating through the treated region will be forced in-to a single mode and will remain substantially single mode when it passes into the untreated region, which is capable of supporting other modes; those other modes will, in an ideal fibre, remain unexcited.

The method may provide an optical device in the form of a fibre input- or output- coupler may comprise the photonic crystal fibre, in which the photonic crystal fibre is cleaved in the heat-treated region. Such devices can be used to enhance the coupling of light into or out of the end of the fibre if the fibre is cleaved in the region of the heat treatment.

The method may provide an optical device in the form of an optical device may comprise a fibre input-or output- coupler and a further optical element, the pattern formed by the collapse or expansion of holes being such that, when a mode is propagating through the optical element and the photonic crystal fibre, the mode patterns in the optical element and the photonic crystal fibre will substantially match at the cleaved face. The further optical element may be a diode laser. Making the mode elliptical or rectangular will allow more efficient launching of light into the fibre from a diode laser source. Indeed, simply expanding the mode size will make easier launching of light from other sources into the fibre.

The fibre coupler may be comprised in a fibre splice, in which the fibre coupler is joined to one or more other fibres. The joining may, for example, be effected by fusion, by an adhesive or by abutment.

At least one of the one or more other fibres included in the fibre splice may be selected from the following: a cleaved photonic crystal fibre; a fibre coupler, as described above; a standard fibre; or a standard fibre that has been tapered by stretching during heat treatment and then cleaved. Controlled hole collapse provides a way of fusion splicing pairs of PCFs together. First the troublesome air holes are eliminated by their complete collapse in a portion of each fibre, as described above. It is not necessary to stretch the fibres. The fibres are cleaved at the portions where the holes have collapsed, and can then be fusion spliced, since there are no holes to explode and the mode fields will match. (If the fibres are not identical, one or both of them can be stretched so that their outer diameters match. Their mode fields will then be identical.) As an alternative to fusion splicing, two PCFs that have matched mode fields can be mechanically spliced using an adhesive in the conventional way.

A standard fibre tapered to the point where the light is guided by its outer boundary has a similar mode field to a PCF whose holes have collapsed completely and which has also been stretched to the same final diameter. The splice will then be low in loss.

In an optical device obtained by the method according to the invention, the pattern formed by the expansion or collapse of holes may enhance the interaction of propagating light with the external environment of the fibre in the heat-treated region, such that measurement of a measurand of the fibre's external environment is facilitated. In an optical device obtained by the method according to the invention, the pattern formed by the expansion or collapse of holes may enhance or suppress the interaction of propagating light with the further optical element. In an optical device obtained by the method according to the invention, the pattern formed by the expansion or collapse of holes may enhance or suppress the interaction of light, propagating in the fibre, with one or more of the further optical fibres in the heat-treated region. At least one of the one or more other optical fibres may be a photonic crystal fibre or a standard fibre. The spreading out of the mode field caused by collapse of air holes will increase the intensity of the field at the outer boundary of the fibre. Light at the boundary is free to interact with the environment around the fibre. Interactions with the external environment can therefore be enhanced (or suppressed) by hole collapse (or expansion). If the light can interact with a particular property in the environment (for example, the external refractive index), the treated fibre will act as an environmental sensor. If a suitable optical element is placed next to the fibre, optical devices can be built based on the interaction with that element. In particular, the optical element can be at least one other fibre, which may be a PCF or a standard fibre and may have been fused to the first fibre during the heat treatment, in a similar process to the fabrication of fused directional couplers in standard fibres.

At least two fibres in the optical device formed by the method may have been at least partly fused together by heat treatment.

A fibre obtained by the method according to the invention may further comprise a structure, introduced elsewhere in the fibre, in which the pattern formed by the expansion or collapse of holes enhances or suppresses the interaction of light, propagating in the fibre, with the structure in the heat-treated region. Examples of such structures are diffraction gratings, doped regions (which may be optically pumped to provide gain), or indeed additional guiding cores. Thus, the fibre may further comprise at least one other core region, in which the pattern formed by the expansion or collapse of holes enhances or suppresses the interaction of light, propagating in the fibre, with the core region(s) in the heat-treated region. The fibre may further comprise a grating, in which the pattern formed by the expansion or collapse of holes enhances or suppresses the interaction of light, propagating in the fibre, with the grating in the heat-treated region. The fibre may further comprise a region of doped material, in which the pattern formed by the expansion or collapse of holes enhances or suppresses the interaction of light, propagating in the fibre, with the region of doped material in the heat-treated region. Devices that can be based on such interactions include directional couplers, spectral filters, sensors and lasers or optical amplifiers. A photonic crystal fibre formed by the method according to the invention may be arranged so that interaction of light, propagating in the photonic crystal fibre, with a structure (deliberately) introduced elsewhere in the fibre is enhanced or suppressed in the heat-treated region. Such a photonic crystal fibre may be included in an optical device. The introduced structure may, for example, be one of the following: at least one other core region in the photonic crystal fibre; a grating; or a region of doped material.

The optical device obtained by the method may be included in another optical device such as a directional coupler, a spectral filter, an optical sensor, a laser or an optical amplifier (which may in turn include a directional coupler).

The method of producing an optical device comprises fabricating a photonic crystal fibre having a plurality of longitudinal holes; characterised in that the method further comprises heat treating a region of the fibre's length so that at least some of the holes in that region have a different cross-sectional area from their cross-sectional area in regions of the fibre's length which have not been heat-treated, the optical properties of the fibre in the heat-treated region being altered by changing the cross-sectional area of holes in that region.

At least some of the holes may be pressurised during the heat treatment. All of the holes may be pressurised during the heat treatment.

The heat treatment may cause at least some, or all, of the air holes within the fibre to collapse completely in the treated region.

Preferably, the heat treatment is applied in a non-circularly-symmetric manner, so that a pattern of hole collapse or expansion that is not circularly symmetric results, such that the birefringence of the fibre is altered in the heat-treated region. The polarisation properties of a PCF depend on the structure in the vicinity of the core. Controlled variation of air hole sizes and overall fibre diameter can therefore be used to modify the birefringence of the fibre.

The fibre may be narrowed locally by stretching during the heat treatment.

The heat treatment may change the physical and/or chemical state of at least some of the material within the fibre.

An embodiment of the invention will now be described, by way of example only, with reference to the accompanying drawings, of which
Fig. 1 is a schematic cross-sectional view through a standard fibre.
Figs. 2a and 2b are schematic views showing heat treatment of a standard fibre.
Fig. 3 is a schematic cross-sectional view through a photonic crystal fibre of the prior art.
Fig. 4 is a schematic cross-sectional view through another photonic crystal fibre of the prior art.
Fig. 5 is a schematic view of an arrangement for carrying out heat-treatment of a fibre.
Fig. 6 is a schematic view showing the effect of heat treatment on a photonic crystal fibre.
Fig. 7 is a schematic view of a directional coupler or beam-splitter.
Fig. 8 is a schematic longitudinal section through a fibre splice.
Fig. 9 is a schematic longitudinal cross-section through a multi-core fibre.
Fig. 10 is a schematic view of (a) an untreated photonic crystal fibre and (b) a photonic crystal fibre which has been heat-treated to produce birefringence.

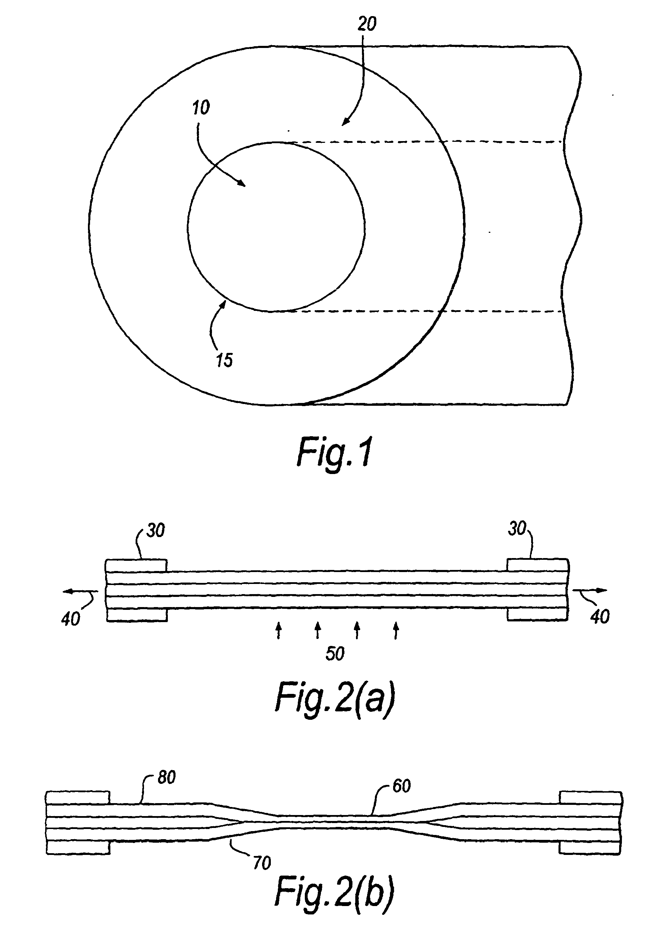

Standard fibres, such as the one shown, for example, in Fig. 1, in their simplest form comprise essentially a cylindrical core 10 and concentric cylindrical cladding 20. Typically, both the core and the cladding will be made of the same material, usually silica, but each is doped with other materials in order to raise the refractive index of the core 10 and lower the refractive index of the cladding 20. Light, of appropriate wavelengths, is confined to the core 10, and guided therein, by total internal reflection at the core-cladding boundary 15.

It is known to heat-treat and stretch standard fibres in order to produce a stretched and narrowed region with optical properties different from those of the rest of the fibre (Figs. 2a and b). In Fig. 2a, the fibre is shown held by clamps 30 and is pulled in opposing directions parallel to is longitudinal axis 40. Heat 50 is applied to the fibre. The result of that treatment is shown in Fig 2b: a waist 60 is formed in the fibre. The cross-sectional area of the core 10 is greatly reduced and the cladding 20 is also significantly narrowed. There is a transitional region 70 between the waist 60 and the rest of the fibre 80.

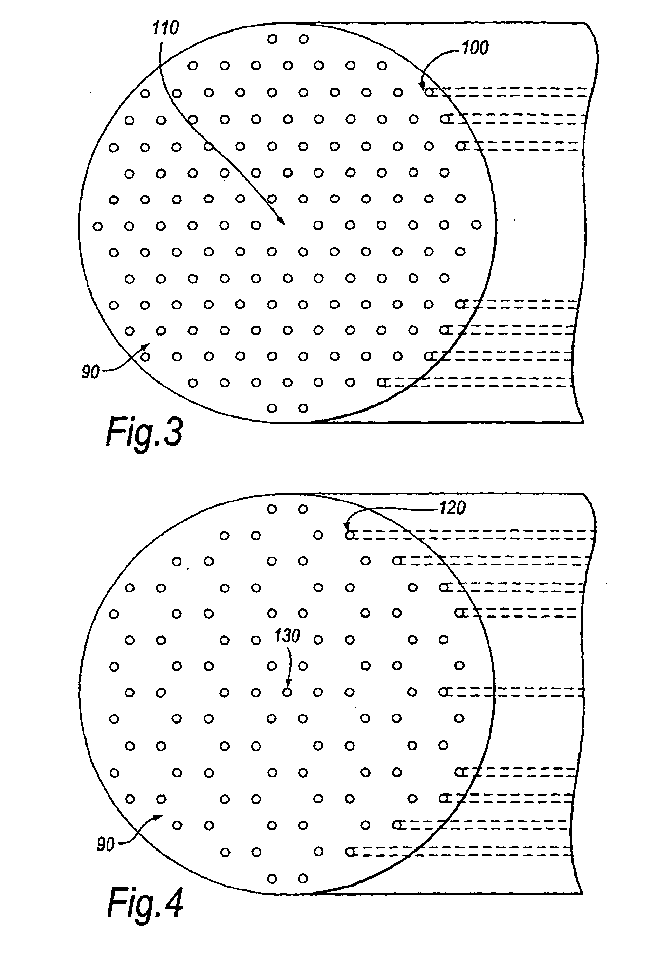

A typical photonic crystal fibre, shown in Fig. 3, comprises a strand of transparent bulk material 90 (e. g. silica) with a lattice of holes 100, which run along its length. The holes are arranged at the vertices and centres of tesselating regular hexagons. The holes have a regular period, broken by the omission of one hole near the centre of the fibre. The region 110 of the fibre surrounding the site of the missing hole has the refractive index of the bulk material 90. The refractive index of the remainder of the fibre is attributable to the refractive index of both the bulk material 90 and the air in the holes 100. The refractive index of air is lower than that of, for example, silica and, consequently, the 'effective refractive index' of the material with the holes is lower than that of the region 110 surrounding the missing hole. The fibre can therefore confine light approximately to the region 110, in a manner analogous to waveguiding by total internal reflection in standard fibres. The region 110 is therefore referred to as the 'core' of the photonic crystal fibre.

In another form of photonic crystal fibre, photonic band gap guidance acts to confine light to the fibre 'core'. In the example of such a fibre shown in Fig. 4, there is a matrix of holes 120 in bulk material 90. The holes are arranged at the vertices (but not the centres, cf. Fig. 3) of regular hexagons. The regularity of the matrix is again broken by a defect, but it is, in the illustrated example, an additional hole 130 at the centre of one of the lattice hexagons, that hexagon being near the centre of the fibre. The area surrounding the additional hole 130 can again be referred to as the core of the fibre. Disregarding (for the moment) hole 130, the periodicity of holes in the fibre results in there being a band-gap in the propagation constants of light which can propagate in the fibre. The addition of hole 130 effectively creates a region that can support propagation constants different from those supported in the rest of the fibre. If some of the propagation constants supported in the region of hole 130 fall within the band-gap of propagation constants forbidden in the rest of the fibre then light having those propagation constants will be confined to the core and propagate therein. Note that because the hole 130 is a low-index defect (it results in air being where bulk material would otherwise be), total internal reflection effects are not responsible for that waveguiding.

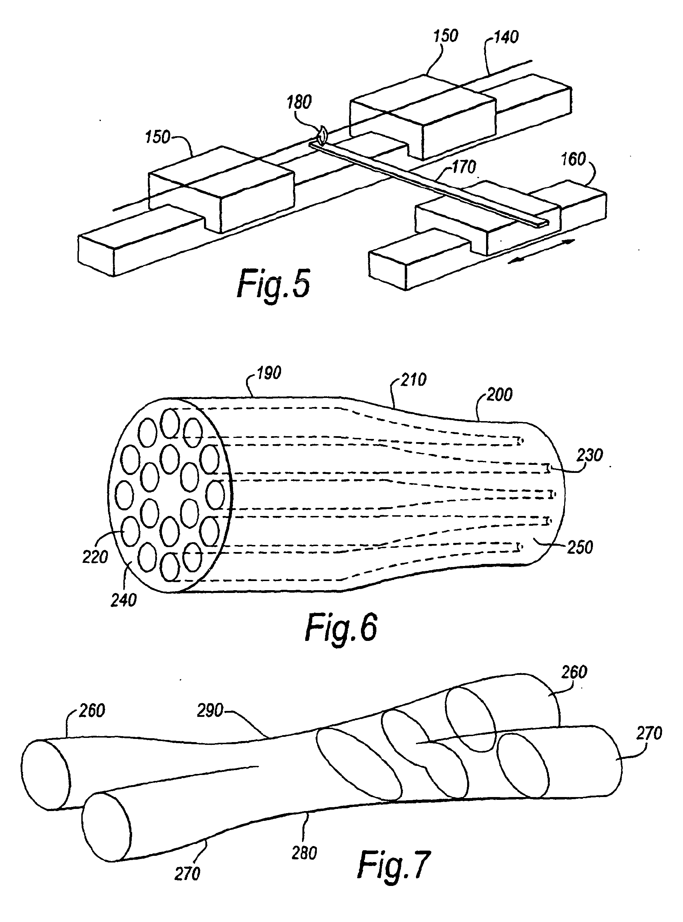

A set-up suitable for use in heat-treatment of a photonic crystal fibre is illustrated in Fig. 5. The fibre 140 is clamped to stages 150, which are in a fixed position; there is no deliberate stretching of the fibre 140. A burner stage 160, having a burner arm 170 is arranged so that a flame 180 heats a portion of fibre 140 between the stages 150. It should be noted that many other heating mechanisms are suitable for carrying out the invention, including, for example, heating with an electric heater or the beam of a carbon dioxide laser.

An example of the effects of heat treatment on a photonic crystal fibre are shown in Fig. 6. There is a heat-treated region 200, an untreated region 190 and a transition region 210. In the example shown, portions 230 of holes in the heat-treated region 200 can be seen to have partially collapsed, when compared with portions 220 in the untreated region 190. The cross-sectional area of each of at least some of the holes therefore varies along the length of that hole. The overall diameter of the fibre will also reduce slightly, although the cross-sectional area of glass 240 in the untreated region 190 will be much the same as that of glass 250 in the treated region 200.

Fig. 7 shows the structure of an optical device that could be made using the method of the invention, namely a directional coupler or beam-splitter. A region 280, 290 in each of two photonic crystal fibres 260, 270 is heat-treated according to the invention. Regions 280, 290 are fused together, for example simultaneously with the heat treatment or by further heat treatment. Light in the heat-treated regions 280, 290 extends into the cladding region of the fibre, because hole collapse has weakened or destroyed the refractive index difference between the cladding and the core. Light propagating in, for example, fibre 260 will be coupled into fibre 270 where the fibres are fused together in regions 280, 290.

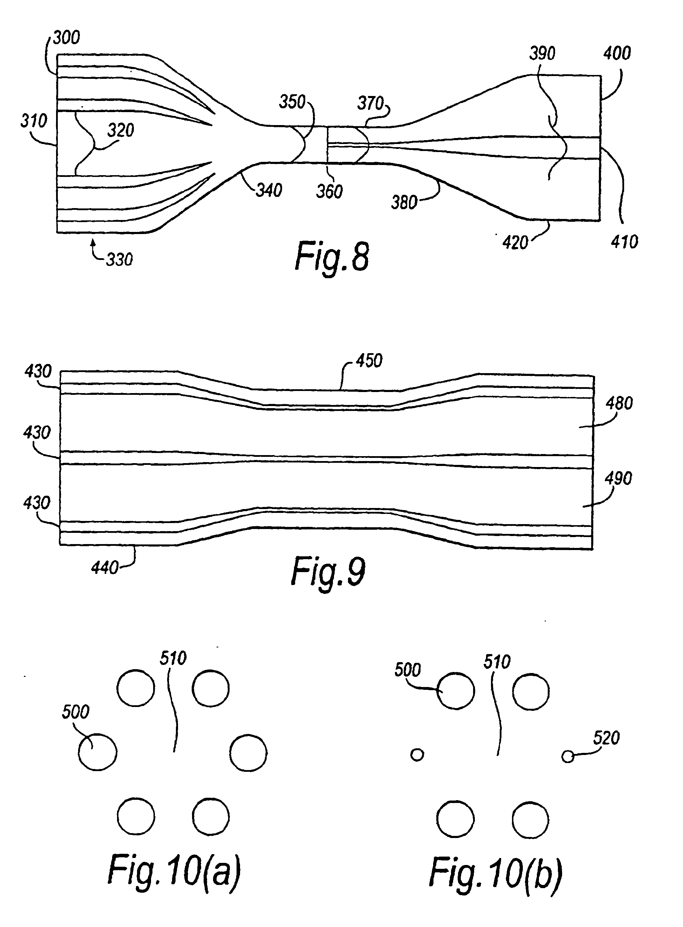

Splicing of a photonic crystal fibre 330 to a standard fibre 420 is shown in Fig. 8. Each fibre is heat-treated stretched and cleaved to produce tapered regions 340, 380. In tapered region 340 of the photonic crystal 330, holes 300 are substantially eliminated. In tapered region 380 of standard fibre 420, both core 410 and cladding 400 taper whilst retaining their independent identities. The two fibres are joined by fusion splice 360.

Light mode 320 propagating in defect core region 310 spreads out to fill the full width of tapered region 340. Mode 350 in that region matches mode 370 in the tapered region 380 of standard fibre 420. Away from the tapered region 380, light is in the usual mode 390 of standard fibre 420.

Fig. 9 shows a multi-core photonic crystal fibre 440. That Figure (like Figures 6, 8 and 10), shows a few holes only; there will be, of course, many holes in a real fibre. Holes 430 surround two cores 480, 490; those cores do not interact optically in untreated regions of the fibre. In heat-treated region 450, holes 430 have partially collapsed. In that region, light propagating in either core 480, 490 can interact with light propagating in the other core. The heat-treated region 450 can then act as a localised directional coupler.

The hexagonal symmetry of holes 500 about the core 510 of the fibre of Fig 10(a) can be broken by selective collapse of holes 520 by heat treatment to produce the two fold rotational symmetry of Fig. 10(b). The birefringence of the fibre may be thus altered in the heat-treated region, as a fibre having such a symmetry will, in general, be birefringent.

## Claims

1. A method of producing an optical device, the method comprising the steps of:
a) fabricating a length of a photonic crystal fibre having a plurality of longitudinal holes;
b) heat treating a region (200) of the fibre's length after fabrication of the fibre so that at least some of the holes in that region have a different cross-sectional area (230) from their cross-sectional area (220) in regions (190) of the fibre's length which have not been heat-treated, the optical properties of the fibre in the heat-treated region (200) being altered by the changing of the cross-sectional area of holes in that region (200) **characterised in that** at least some of the holes are pressurised during the heat treatment.

2. A method according to claim 1, in which all of the holes are pressurised during the heat treatment.

3. A method according to claim 1 or claim 2 in which the heat treatment causes at least some of the holes (230) within the fibre to collapse at least partially in the treated region.

4. A method according to claim 2 or claim 3, in which the heat treatment causes at least some of the holes within the fibre to collapse completely in the treated region.

5. A method according to any of claims 1 to 4, in which the heat treatment is applied in a non-circularly-symmetric manner, so that a pattern of hole collapse or expansion that is not circularly symmetric results, such that the birefringence of the fibre is altered in the heat-treated region.

6. A method according to any of claims 1 to 5, in which the fibre is narrowed locally by stretching during the heat treatment.

7. A method according to any of claims 1 to 6, in which the heat treatment changes the physical and/or chemical state of at least some of the material within the fibre.

8. A method according to any of claims 1 to 7, in which the pattern formed by the collapse or expansion of holes in the heat-treated region of the photonic crystal fibre being such that a guided mode propagating through the photonic crystal fibre will have its field distribution changed by propagation through the heat-treated region, thereby forming a mode-field transformer.

9. A method according to any of claims 1 to 8, in which the pattern formed by the collapse or expansion of holes is such that the second, untreated region of the fibre is multi-mode and the first, heat-treated region is single mode for at least one wavelength of light, thereby forming a multi-mode to single mode transformer or mode filter.

10. A method of producing an optical device, the method comprising the steps of:
a) fabricating a length of a photonic crystal fibre having a plurality of longitudinal holes;
b) heat treating a region (200) of the fibers length after fabrication of the fibre so that at least some of the holes in that region have a different cross-sectional area (230) from their cross-sectional area (220) in regions (190) of the fibre's length which have not been heat treated, the optical properties of the fibre in the heat-treated region (200) being altered by the changing of the cross-sectional area of holes in that region 200, **characterised in that** the photonic crystal fibre is cleaved in the heat-treated region to form a cleaved face, thereby forming a fibre input- or output-coupler.

11. A method according to claim 10, in which the heat treatment causes all of the holes within the fibre to collapse compleately in the treated region.

12. A method according to claim 10 or claim 11, the optical device comprising a further optical element, the pattern formed by the collapse or expansion of holes being such that, when a mode is propagating through the optical element and the photonic crystal fibre, the mode patterns in the optical element and the photonic crystal fibre will substantially match at the cleaved face.

13. A method according to claim 12, in which the further optical element is a diode laser.

14. A method according to claim 10 or claim 11, in which the fibre coupler (330) is joined to one or more other fibres (420) by a fibre splice.

15. A method according to claim 14, in which the fibre coupler (330) is joined to one or more other fibres (420) by fusion splicing.

16. A method according to claim 14, in which the fibre coupler is joined to one or more other fibres by an adhesive.

17. A method according to claim 14, in which the fibre coupler is joined to one or more other fibres by abutment.

18. A method according to any of claims 14 to 17, in which at least one of the one or more other fibres is a cleaved photonic crystal fibre.

19. A method according to claim 18, in which at least one of the one or more other fibres is a fibre coupler as formed by the method according to claim 10.

20. A method according to any of claims 14 to 19, in which one or more of the other fibres is a standard fibre (420).

21. A method according to claim 20, in which at least one of the one or more other fibres (420) that is a standard fibre has been tapered by stretching during heat treatment and then cleaved.

## Patentansprüche

1. Verfahren zur Herstellung einer optischen Vorrichtung in den Schritten:
a) Herstellung einer Länge einer photonischen Kristallfaser mit einer Anzahl von länglichen Löchern;
b) Hitzebehandlung eines Abschnitts (200) der Faserlänge nach Herstellung der Faser, so dass mindestens einige der Löcher in diesem Abschnitt eine von der Querschnittsfläche (220) in nicht hitzebehandelten Abschnitten (190) der Faserlänge unterschiedliche Querschnittsfläche (230) aufweisen, wobei die optischen Eigenschaften der Faser im hitzebehandelten Abschnitt (200) durch die Änderung der Querschnittsfläche der Löcher in diesem Abschnitt (200) verändert werden, **dadurch gekennzeichnet, dass** zumindest einige der Löcher während der Hitzebehandlung mit Druck beaufschlagt werden.

2. Verfahren nach Anspruch 1, in welchem alle Löcher während der Hitzebehandlung mit Druck beaufschlagt werden.

3. Verfahren nach Anspruch 1 oder 2, in welchem die Hitzebehandlung dazu führt, dass mindestens einige der Löcher (130) in der Faser in dem behandelten Abschnitt zumindest teilweise kollabieren.

4. Verfahren nach Anspruch 2 oder 3, in welchem die Hitzebehandlung dazu führt, dass mindestens einige der Löcher in der Faser in dem behandelten Abschnitt vollständig kollabieren.

5. Verfahren nach jedem der Ansprüche 1 bis 4, in welchem die Hitzebehandlung nicht rotationssymmetrisch vorgenommen wird, so dass ein nicht rotationssymmetrisches Lochkollaps- oder Expansionsmuster entsteht, so dass die Doppelbrechung der Faser im hitzebehandelten Abschnitt verändert wird.

6. Verfahren nach jedem der Ansprüche 1 bis 5, in welcher die Faser während der Hitzebehandlung lokal verengt wird.

7. Verfahren nach jedem der Ansprüche 1 bis 6, in welchem die Hitzebehandlung den physikalischen und/oder chemischen Zustand von zumindest einigem Material in der Faser verändert.

8. Verfahren nach jedem der Ansprüche 1 bis 7, in welchem das durch den Kollaps oder die Expansion der Löcher im hitzebehandelten Abschnitt der photonischen Kristallfaser gebildete Muster so ist, dass die Feldverteilung eines geführten Mode bei der Fortpflanzung durch die photonische Kristallfaser durch die Fortpflanzung durch den hitzebehandelten Abschnitt verändert wird, wodurch ein Modenwandler gebildet wird.

9. Verfahren nach jedem der Ansprüche 1 bis 8, in welchem das durch den Kollaps oder die Expansion der Löcher gebildete Muster so ist, dass für mindestens eine Lichtwellenlänge der zweite unbehandelte Abschnitt der Faser multimodig und der erste hitzebehandelte Abschnitt einfachmodig ist, wodurch ein Multimoden zu Einfachmoden-Wandler oder Modenfilter gebildet wird.

10. Verfahren zur Herstellung einer optischen Vorrichtung in den Schritten:
a) Herstellung einer Länge einer photonischen Kristallfaser mit einer Anzahl von länglichen Löchern;
b) Hitzebehandlung eines Abschnitts (200) der Faserlänge nach Herstellung der Faser, so dass mindestens einige der Löcher in diesem Abschnitt eine von der Querschnittsfläche (220) in nicht hitzebehandelten Abschnitten (190) der Faserlänge unterschiedliche Querschnittsfläche (230) aufweisen, wobei die optischen Eigenschaften der Faser im hitzebehandelten Abschnitt (200) durch die Änderung der Querschnittsfläche der Löcher in diesem Abschnitt (200) verändert werden, **dadurch gekennzeichnet, dass**
die photonische Kristallfaser im hitzebehandelten Abschnitt aufgespalten wird, um eine Spaltfläche zu bilden, wodurch eine Ausgangs- oder Eingangskopplung gebildet wird.

11. Verfahren nach Anspruch 10, in welchem die Hitzebehandlung dazu führt, dass im hitzebehandelten Abschnitt alle Löcher in der Faser vollständig kollabieren.

12. Verfahren nach Anspruch 10 oder 11, wobei die optische Vorrichtung ein weiteres optisches Element umfasst, wobei das durch das Kollabieren oder Expandieren der Löcher gebildete Muster so ist, dass bei der Fortpflanzung des Mode durch das optische Element und die photonische Kristallfaser die Modenmuster im optischen Element und der photonischen Kristallfaser an der Spaltfläche im wesentlichen übereinstimmen.

13. Verfahren nach Anspruch 12, in welchem das weitere optische Element ein Diodenlaser ist.

14. Verfahren nach Anspruch 10 oder 11, die Faserkopplung (330) mit einer oder mehreren anderen Fasern (420) über einen Faserspleiß verbunden wird.

15. Verfahren nach Anspruch 14, in welchem die Faserkopplung (330) mit einer oder mehreren anderen Fasern (420) durch Verschmelzen verbunden wird.

16. Verfahren nach Anspruch 14, in welchem die Faserkopplung mit einer oder mehreren anderen Fasern durch einen Kleber verbunden wird.

17. Verfahren nach Anspruch 14, in welchem die Faserkopplung mit einer oder mehreren anderen Fasern durch Stecken verbunden wird.

18. Verfahren nach jedem der Ansprüche 14 bis 17, in welchem mindestens eine der einen oder mehreren anderen Fasern eine aufgespaltene photonische Kristallfaser ist.

19. Verfahren nach Anspruch 18, in welchem mindestens eine der einen oder mehreren anderen Fasern eine nach dem Verfahren gemäß Anspruch 10 gebildete Faserkopplung ist.

20. Verfahren nach jedem der Ansprüche 14 bis 19, in welchem eine oder mehrere der anderen Fasern eine Standardfaser (420) ist.

21. Verfahren nach Anspruch 20, in welchem mindestens eine der einen oder mehreren anderen Fasern (420), welche eine Standardfaser ist, während der Hitzebehandlung durch Strecken verjüngt und sodann aufgespalten worden ist.

## Revendications

1. Un procédé de production d'un dispositif optique, le procédé comprenant les étapes consistant a) à fabriquer une fibre optique à cristal photonique comportant une pluralité de trous longitudinaux; b) à traiter thermiquement une région (200) de la longueur de la fibre de sorte qu'au moins certains des trous dans cette région présentent une surface en section transversale (230) différente par rapport à leur surface en section transversale (220) dans les régions (190) de la longueur de la fibre qui n'ont pas été traitées thermiquement, les propriétés optiques de la fibre dans la région traitée thermiquement (200) étant modifiées en changeant la surface en section transversale des trous dans cette région (200), **caractérisé en ce que** au moins certains des trous sont compressés pendant le traitement thermique.

2. Un procédé selon la revendication 1, dans lequel tous les trous sont compressés pendant le traitement thermique.

3. Un procédé selon la revendication 1 ou la revendication 2, dans lequel le traitement thermique amène au moins certains trous (230) à l'intérieur de la fibre à se resserrer au moins partiellement dans la région traitée.

4. Un procédé selon la revendication 2 ou la revendication 3, dans lequel le traitement thermique amène au moins certains des trous à l'intérieur de la fibre à se resserrer totalement dans la région traitée.

5. Un procédé selon l'une quelconque des revendications 1 à 4, dans lequel le traitement thermique est appliqué de manière non circulairement symétrique, de sorte qu'un motif de resserrement ou d'élargissement de trou qui n'est pas circulairement symétrique en résulte, de sorte que la biréfringence de la fibre soit modifiée dans la région traitée thermiquement.

6. Un procédé selon l'une quelconque des revendications 1 à 5, dans lequel la fibre se rétrécit localement par étirement pendant le traitement thermique.

7. Un procédé selon l'une quelconque des revendications 1 à 6, dans lequel le traitement thermique change l'état physique et/ou chimique d'au moins une certaine partie du matériau à l'intérieur de la fibre.

8. Un procédé selon l'une quelconque des revendications 1 à 7, dans lequel le modèle formé par le resserrement ou l'élargissement des trous dans la région traitée thermiquement de la fibre optique à cristal photonique étant tel qu'un mode guidé se propageant à travers la fibre optique à cristal photonique aura sa distribution de champ changée par la propagation à travers la région traitée thermiquement, formant un transformateur de champ de mode.

9. Un procédé selon l'une quelconque des revendications 1 à 8, dans lequel le modèle formé par le resserrement ou l'élargissement des trous est tel que la seconde région non traitée de la fibre est multi-modes et la première région traitée thermiquement est monomode pour au moins une longueur d'onde de lumière, formant ainsi un transformateur multi-modes à monomode ou filtre de mode.

10. Un procédé de production d'un dispositif optique, le procédé comprenant les étapes consistant :
a) à fabriquer une longueur d'une fibre optique à cristal photonique comportant une pluralité de trous longitudinaux;
b) à traiter thermiquement une région (200) de la longueur de la fibre de sorte qu'au moins certains des trous dans cette région présentent une surface en section transversale (230) différente par rapport à leur surface en section transversale (220) dans les régions (190) de la longueur de la fibre qui n'ont pas été traitées thermiquement, les propriétés optiques de la fibre dans la région traitée thermiquement (200) étant modifiées en changeant la surface en section transversale des trous dans cette région (200), **caractérisé en ce que** la fibre optique à cristal photonique est clivée dans la région traitée thermiquement pour former une face clivée, formant ainsi un coupleur d'entrée ou de sortie à fibre.

11. Un procédé selon la revendication 10, dans lequel le traitement thermique amène tous les trous à l'intérieur de la fibre à se resserrer totalement dans la région traitée.

12. Un procédé selon la revendication 10 ou 11, le dispositif optique comprenant un autre élément optique, le modèle formé par le resserrement ou l'élargissement des trous étant tel que, lorsqu'un mode se propage à travers l'élément optique et la fibre optique à cristal photonique, les modèles du mode dans l'élément optique et dans la fibre optique à cristal photonique correspondront sensiblement au niveau de la face clivée.

13. Un procédé selon la revendication 12, dans lequel l'autre élément optique est une diode laser.

14. Un procédé selon la revendication 10 ou 11, dans lequel le coupleur pour fibres (330) est raccordé à une ou plusieurs autres fibres (420) au moyen d'une épissure.

15. Un procédé selon la revendication 14, dans lequel le coupleur pour fibres (330) est raccordé à une ou plusieurs autres fibres (420) par fusion.

16. Un procédé selon la revendication 14, dans lequel le coupleur pour fibres est raccordé à une ou plusieurs autres fibres par un adhésif.

17. Un procédé selon la revendication 14, dans lequel le coupleur pour fibres est raccordé à une ou plusieurs autres fibres par aboutement.

18. Un procédé selon l'une quelconque des revendications 14 à 17, dans lequel au moins une ou plusieurs des autres fibres est une fibre optique à cristal photonique clivée.

19. Un procédé selon la revendication 18, dans lequel au moins une de l'une ou des autres fibres est un coupleur pour fibres formé par le procédé selon la revendication 10.

20. Un procédé selon l'une quelconque des revendications 14 à 19, dans lequel au une des autres fibres, ou plus, est une fibre standard (420).

21. Un procédé selon la revendication 20, dans lequel au moins une de l'une ou des autres fibres (420) qui est une fibre standard a été effilée par étirement pendant le traitement thermique et ensuite clivée.
